# EUROPÄISCHE PATENTSCHRIFT

(11) **EP 3 582 468 B1**
(45) Veröffentlichungstag und Bekanntmachung des Hinweises auf die Patenterteilung: **16.02.2022**
(21) Anmeldenummer: 19179699.4
(22) Anmeldetag: 12.06.2019
(51) Int. Cl.: H04L 29/06

(54) **VERFAHREN ZUR BESTIMMUNG EINES TÄUSCHUNGSMASSES FÜR EINEN EINZELNEN PHISHING-ANGRIFF GEGEN EINE PERSON**
METHOD FOR DETERMINING A DEGREE OF DECEPTION FOR A SINGLE PHISHING ATTACK AGAINST A SUBJECT
PROCÉDÉ DE DÉTERMINATION D'UNE MESURE DE FALSIFICATION POUR UNE ATTAQUE D'HAMEÇONNAGE INDIVIDUELLE CONTRE UNE PERSONNE

(30) Priorität: 12.06.2018 DE 102018113994
(43) Veröffentlichungstag der Anmeldung: 18.12.2019
(73) Patentinhaber: IT-Seal GmbH, 64295 Darmstadt (DE)
(72) Erfinder: Kelm, David, 64293 Darmstadt (DE); Alex, Wyllic, 64285 Darmstadt (DE); Ambach, Yannic, 64283 Darmstadt (DE); Franz, Anjuli, 64283 Darmstadt (DE)
(74) Vertreter: Habermann Intellectual Property Partnerschaft von Patentanwälten mbB

(56) Entgegenhaltungen:
- US-A1- 2014 230 050
- US-A1- 2016 330 238
- US-A1- 2017 126 729

## Beschreibung

Die Erfindung betrifft ein Verfahren zur Bestimmung eines Täuschungsmaßes für einen einzelnen Phishing-Angriff gegen eine Person, wobei das Täuschungsmaß ein Maß für die Wahrscheinlichkeit darstellt, dass der Phishing-Angriff erfolgreich ist.

Phishing-Angriffe dienen dazu, persönliche Daten und Informationen der von dem Phishing-Angriff betroffenen Person oder insbesondere dem Unternehmen zu erhalten, bei dem die Person beschäftigt ist. Zu diesem Zweck wird mittels gefälschter Webseiten, E-Mails, Kurznachrichten oder auch Telefonanrufen versucht, die Person zu einer bestimmten Reaktion oder auch zur unmittelbaren Herausgabe von Informationen zu bewegen. So ist es beispielsweise bekannt, durch Phishing-E-Mails den E-Mail-Empfänger dazu zu bewegen, eine an die E-Mail angefügte Datei oder eine in dem E-Mail-Text enthaltenen Hyperlink anzuklicken, wobei anschließend unbemerkt eine Schadsoftware auf dem Computer der von dem Phishing-Angriff betroffenen Person installiert wird. Diese Schadsoftware kann dann von der den Phishing-Angriff ausführenden Person dazu benutzt werden, weitere Informationen über die angegriffene Person oder das Unternehmen, wie beispielsweise Bankdaten, zu erhalten.

Phishing-Angriffe basieren grundsätzlich auf dem Ansatz, der angegriffenen Person vorzutäuschen, dass es sich bei dem E-Mail-Versender, dem Anbieter der Internetseite oder auch dem Anrufer um eine vertrauenswürdige Person oder Institution handelt. So werden bei Phishing-Angriffen beispielsweise Internetauftritte bekannter Banken nachgeahmt, um auf diese Weise die von dem Phishing-Angriff betroffene Person dazu zu bewegen, persönliche und vertrauliche Bankdaten auf der bereitgestellten und gefälschten Internetseite einzugeben.

In Druckschrift US 2016/330238 A1 wird ein System beschrieben, durch das in unterschiedliche Schwierigkeitsgrade ("difficulty levels") klassifizierte Phishing-Nachrichten erstellt, gespeichert und an unterschiedliche Benutzer gesendet werden. Das System überwacht und protokolliert, ob der Benutzer auf die Phishing-Nachricht klickt oder diese meldet. Die Klassifizierung der Schwierigkeitsgrade erfolgt dabei über innerhalb der Phishing-Nachrichten enthaltenen Merkmale wie Rechtschreibfehler, Grammatikfehler oder über falsche Internetlinks.

In Druckschrift US 2017/126729 A1 wird ein System zur Bewertung eines Phishing-Versuchs mittels eines Bewertungsparameter beschrieben. Zunächst wird ein Zieldomainname für eine Pseudowebseite identifiziert. Basierend auf dem Zieldomainnamen wird ein Pseudodomänenname erstellt, der ähnliche Merkmale, wie beispielsweise die Schreibweise des Zieldomainnames aufweist. Die Pseudowebseite wird unter Verwendung eines oder mehrerer Merkmale, wie beispielsweise das Aussehen der Webseite der Zieldomain erstellt. Die Auswertung der Bewertung des Phishing-Versuchs wird unter Verwendung des Pseudodomainnamens und der Pseudowebseite durchgeführt. Dabei kann der Bewertungsparameter auf Grundlage des Besuchs der Pseudowebseite, des Klicks auf einen Internetlink auf der Pseudowebseite oder auf Grundlage der Eingabe von persönlichen Daten ermittelt werden.

In Druckschrift US 2014/230050 A1 werden ein Verfahren, Netzwerkgeräte und maschinenlesbare Speichermedien beschrieben, um zu erkennen, ob es sich bei einer Nachricht um einen Phishing-Angriff handelt. Eine oder mehrere Personen können die Nachricht als möglichen Phishing-Angriff kennzeichnen und bewerten. Dabei werden die Antworten der Personen mit einem unterschiedlichen Grad an Zuverlässigkeit gewichtet. Somit kann festgestellt werden, ob es sich bei einer Nachricht um einen Phishing-Angriff handelt und wie zuverlässig die Person den Phishing-Angriff erkannt hat.

Der Erfolg einer Phishing-Attacke hängt insbesondere davon ab, wie vertrauenswürdig die angegriffene Person die jeweilige Phishing-Attacke einstuft. Dabei kommt es zum einen auf die Aufmerksamkeit der angegriffenen Person und deren Kenntnisse über etwaige Phishing-Angriffe an und zum anderen auf die Qualität des jeweiligen Phishing-Angriffs an.

Um die Aufmerksamkeit zu schulen und zu erhöhen, ist es bekannt, dass Unternehmen für Ihre Mitarbeiter geeignete Schulungen anbieten, in denen den Mitarbeitern die Gefahren solcher Phishing-Angriffe erläutert werden. Darüber hinaus ist es bekannt, dass Unternehmen Ihre Mitarbeiter auch durch simulierte Phishing-Attacken schulen.

Bei simulierten Phishing-Attacken werden alle oder ausgewählte Personen eines Unternehmens mit simulierten Phishing-Attacken konfrontiert, wobei den Mitarbeitern der Zeitpunkt der Phishing-Attacke im Vorfeld zweckmäßigerweise nicht bekannt sein sollte. Üblicherweise werden bei derartigen, praxisbezogenen Schulungen zahlreiche unterschiedliche Phishing-Attacken gegen die ausgewählten Personen des Unternehmens simuliert und der Erfolg der jeweiligen Phishing-Attacke protokolliert. Auf diese Weise kann das Sicherheitsverhalten der geschulten Personen besonders effizient erhöht werden.

Solche simulierten Phishing-Attacken werden üblicherweise in geeigneten zeitlichen Abständen wiederholt, um die Aufmerksamkeit der beteiligten Personen aufrechtzuerhalten, die Personen gegenüber neuartigen Phishing-Attacken zu sensibilisieren und auch um das Sicherheitsniveau des Unternehmens gegenüber Phishing-Attacken zu überprüfen. Insbesondere die Überprüfung und Feststellung des Sicherheitsniveaus des Unternehmens ist für die Unternehmen ein wichtiger Aspekt, da durch die Überprüfung mögliche Schwachstellen festgestellt und durch weitere Schulungen abgestellt werden können.

Zu diesem Zweck wird üblicherweise ermittelt, wie viele der simulierten Phishing-Attacken erfolgreich waren. Hierbei wird jedoch die Qualität des jeweiligen konkreten Phishing-Angriffs gegen eine Person nicht berücksichtigt, so dass verschiedene Phishing-Angriffe gegen dieselbe Person als auch vergleichbare und unterschiedliche Phishing-Angriffe gegen verschiedene Personen desselben Unternehmens oder auch zwischen verschiedenen Unternehmen nicht miteinander vergleichbar sind.

Als Aufgabe der Erfindung wird es daher angesehen, die Qualität eines simulierten Phishing-Angriffs messtechnisch vor der Durchführung des Phishing-Angriffs zu erfassen und zu quantifizieren.

Diese Aufgabe wird erfindungsgemäß durch ein Verfahren zur Bestimmung eines Täuschungsmaßes für einen einzelnen Phishing-Angriff gegen eine Person gelöst, wobei das Täuschungsmaß ein Maß für die Wahrscheinlichkeit darstellt, dass der Phishing-Angriff erfolgreich ist, wobei ein für die Vorbereitung des Phishing-Angriffs gegen die Person erforderlicher Zeitaufwand messtechnisch erfasst wird und wobei unter Verwendung des messtechnisch erfassten Zeitaufwands das Täuschungsmaß mit einer vorgegebenen Täuschungsmaß-Berechnungsvorschrift ermittelt wird. Mit Hilfe des so ermittelten Täuschungsmaßes wird die Qualität des einzelnen Phishing-Angriffs quantifiziert. Hierzu wird messtechnisch die Zeitdauer erfasst, die für die Vorbereitung des jeweiligen Phishing-Angriffs erforderlich war.

Die Qualität eines Phishing-Angriffs ist vor allen Dingen davon abhängig, wie überzeugend der angegriffenen Person vermittelt wird, dass es sich bei dem Angreifer um eine vertrauenswürdige Person handelt. Zu diesem Zweck werden beispielsweise bei dem sogenannten Spear-Phishing Phishing-E-Mails personalisiert und auf die jeweilige angegriffene Person abgestimmt. Hierzu können weitere Hintergrundinformationen zu der angegriffenen Person zum Beispiel in sozialen Medien oder auf den Internet-Seiten des Unternehmens recherchiert werden. Auf Grundlage der so gesammelten Informationen können äußerst vertrauenswürdig wirkende Phishing-Angriffe vorbereitet werden. Daher korreliert die für die Vorbereitung eines konkreten Phishing-Angriffs benötigte Zeitdauer und damit die für die vorbereitende Recherche verwendete Zeit zuzüglich der für die Vorbereitung des konkreten Phishing-Angriffs auf Grundlage der Rechercheergebnisse verwendete Zeit unmittelbar mit der Qualität des jeweiligen Phishing-Angriffs. Daher eignet sich die messtechnisch erfasste Zeitdauer für die Vorbereitung des konkreten Phishing-Angriffs zur Berechnung des Täuschungsmaßes.

Zur weiteren Verbesserung des berechneten Täuschungsmaßes ist erfindungsgemäß vorgesehen, in der Täuschungsmaß-Berechnungsvorschrift auch einen Erfahrungswert der den konkreten Phishing-Angriff vorbereitenden Person zu berücksichtigen und den messtechnisch erfassten Zeitaufwand mit dem Erfahrungswert zu bewerten. Auf diese Weise kann bei dem berechneten Täuschungsmaß berücksichtigt werden, dass ein unerfahrener Angreifer für die Vorbereitung eines Angriffs üblicherweise länger benötigt als ein erfahrener Angreifer.

Bei einer besonders einfachen und erfindungsgemäß vorgesehenen Täuschungsmaß-Berechnungsvorschrift entspricht die Zeitdauer unmittelbar dem Täuschungsmaß. Es ist aber auch möglich und erfindungsgemäß vorgesehen, dass die jeweilige Zeitdauer mit einer geeigneten logarithmischen Funktion bewertet wird, um auf diese Weise in dem Täuschungsmaß abzubilden, dass die Qualität eines Phishing-Angriffs bereits durch wenige recherchierte Informationen über die angegriffene Person erheblich verbessert werden kann, während eine weitere Verbesserung der Qualität nur durch einen überproportionalen weiteren Zeitaufwand bei der Vorbereitung des jeweiligen Phishing-Angriffs ermöglicht werden wird. Erfindungsgemäß ist es möglich, dass mit der Täuschungsmaß-Berechnungsvorschrift die bekannten mathematischen Wachstumsmodelle und insbesondere das lineare, das exponentielle, das beschränkte und das logistische Wachstum bei der Bewertung der messtechnisch erfassen Zeitdauer für die Vorbereitung des jeweiligen Phishing-Angriffs abgebildet werden können.

Bei einer besonders vorteilhaften Ausgestaltung des erfindungsgemäßen Verfahrens ist vorgesehen, dass der messtechnisch erfasste Zeitaufwand nach einer vorgegebenen Klasseneinteilungsvorschrift einer Klasse zugeordnet wird, wobei jeder Klasse ein Wert für das Täuschungsmaß zugewiesen ist. Die Täuschungsmaß-Berechnungsvorschrift stellt in diesem Fall also ein Klassifizierungsverfahren dar.

Bei einer vorteilhaften Ausgestaltung des verwendeten Klassifizierungsverfahrens ist vorgesehen, dass einem für die Vorbereitung des Phishing-Angriffs erforderlicher messtechnisch erfasste Zeitaufwand von weniger als einer Stunde das Täuschungsmaß 1 zugewiesen wird, das einem für die Vorbereitung des Phishing-Angriffs erforderlicher messtechnisch erfasste Zeitaufwand von weniger als vier Stunden das Täuschungsmaß 2 zugewiesen wird, das einem für die Vorbereitung des Phishing-Angriffs erforderlicher messtechnisch erfasste Zeitaufwand von weniger als sieben Stunden das Täuschungsmaß 3 zugewiesen wird, dass einem für die Vorbereitung des Phishing-Angriffs erforderlicher messtechnisch erfasste Zeitaufwand von weniger als zehn Stunden das Täuschungsmaß 4 zugewiesen wird, dass einem für die Vorbereitung des Phishing-Angriffs erforderlicher messtechnisch erfasste Zeitaufwand von weniger als vierzig Stunden das Täuschungsmaß 5 zugewiesen wird und dass einem für die Vorbereitung des Phishing-Angriffs erforderlicher messtechnisch erfasste Zeitaufwand von mehr als vierzig das Täuschungsmaß 6 zugewiesen wird. Auf diese Weise wird auch das beschränkte Wachstum der Steigerung der Qualität des jeweiligen Phishing-Angriffs bei zusätzlichem Zeitaufwand bei dem verwendeten Klassifizierungsverfahren berücksichtigt.

In der nachfolgenden Tabelle wird der definierte Klassifizierungs-Algorithmus dargestellt, wobei den jeweiligen Täuschungsmaßen exemplarisch eine mögliche Ausgestaltung des mit dem jeweiligen Täuschungsmaß verbundenen Phishing-Angriffs aufgeführt ist.

| **Täuschungsmaß** | **Zeitaufwand** | **Beispiel für die Ausgestaltung des Phishing-Angriffs** |
|---|---|---|
| **1** | < 1h | Massen Phishing-E-Mail oder E-Mail eines externen ohne weiteren Bezug zur angegriffenen Person |
| **2** | < 4h | Phishing-E-Mail mit persönlichem Bezug; beispielsweise Nutzung von Informationen zur angegriffenen Person, zum Unternehmen und zu |
| | | Unternehmensabläufen |
| **3** | < 7h | Phishing-E-Mail mit weitergehendem persönlichen Bezug; verschiedene Informationen werden verknüpft |
| **4** | < 10h | Sehr zielgerichtete Phishing-E-Mail, die auf einer Vielzahl Informationen aufbaut |
| **5** | < 40h | Individuell vorbereiteter Telefonanruf oder einfache physische Angriffe zum Beispiel per USB-Stick |
| **6** | > 40h | Komplexer, mehrstufiger Angriff über verschiedene Ebenen (E-Mail, Telefon, physisch) |

Vorteilhafterweise wird bei der Kategorisierung der unterschiedlichen Phishing-Angriffe der von einem versierten Angreifer auf der Stufe eines mehrjährig ausgebildeten IT-Sicherheitsspezialisten für die Vorbereitung eines entsprechenden Angriffs üblicherweise benötigte Zeitaufwand zu Grunde gelegt.

Das mit dem erfindungsgemäßen Verfahren beschriebene Täuschungsmaß dient dazu, die Qualität unterschiedlicher Phishing-Attacken messtechnisch zu erfassen und zu quantifizieren. Auf Grundlage dieser Informationen ist es möglich, auch das Sicherheitsniveau einer Gruppe von Personen bzw. eines ganzen Unternehmens messtechnisch zu erfassen und zu quantifizieren.

Zu diesem Zweck ist erfindungsgemäß ein Verfahren zur Ermittlung eines Gefährdungsmaßes einer Gruppe von Personen durch Phishing-Angriffe vorgesehen, wobei das Gefährdungsmaß ein Maß dafür darstellt, dass ein Phishing-Angriff gegen die Gruppe von Personen erfolgreich ist, wobei eine vorgegebene Anzahl von Phishing-Angriffen mit vorgegebenen und wie voranstehend beschrieben ermittelten Täuschungsmaßen gegen jede Person der Gruppe durchgeführt wird, wobei für jeden Phishing-Angriff festgehalten wird, ob der jeweilige Phishing-Angriff erfolgreich war und wobei das Gefährdungsmaß unter Berücksichtigung des Täuschungsmaßes des jeweiligen erfolgreichen Phishing-Angriffs und der Anzahl erfolgreicher Phishing-Angriffe mit einer vorgegebenen Gefährdungsmaß-Berechnungsvorschrift ermittelt wird. Durch die Bewertung der durchgeführten Phishing-Angriffe mit dem zuvor ermittelten Täuschungsmaß des jeweiligen Phishing-Angriffs und Überprüfung des Erfolgs der unterschiedlich bewerteten Phishing-Angriffe kann das Sicherheitsniveau der Gruppe durch die Ermittlung des Gefährdungsmaßes bestimmt werden.

Bei Verwendung eines Klassifizierungsverfahrens zur Ermittlung des Täuschungsmaßes ist vorteilhafterweise vorgesehen, dass ein klassenbezogenes Gefährdungsmaß für jede Klasse ermittelt wird, wobei das jeweilige klassenbezogene Gefährdungsmaß der prozentuale Anteil erfolgreicher Phishing-Angriffe von der jeweiligen Klasse zugeordneter Phishing-Angriffe ist. Auf diese Weise kann besonders einfach ermittelt werden, wie hoch das Sicherheitsniveau der Gruppe von Personen in Bezug auf Phishing-Angriffe einer vorgegebenen Qualitätsstufe ist.

Vorteilhafterweise ist bei dem erfindungsgemäßen Verfahren vorgesehen, dass für jede Klasse eine vorgegebene Klassenanzahl einer jeweiligen Klasse zugeordneter Phishing-Attacken gegen die Gruppe durchgeführt wird, wobei das Gefährdungsmaß der prozentuale Anteil aller erfolgreichen Phishing-Attacken ist. Bei der Klassenanzahl handelt es sich um die Anzahl durchzuführenden und einer bestimmten Klasse zugeordneten Phishing-Attacken. Durch die Vorgabe der Klassenanzahl und die nachfolgende klassenunabhängige Ermittlung erfolgreicher Phishing-Attacken kann das jeweilige Täuschungsmaß über die Gruppe von Personen bei der Bestimmung des Gefährdungsmaßes besonders einfach berücksichtigt werden, ohne dass protokolliert werden muss, welche konkrete Phishing-Attacke erfolgreich war. Hierdurch wird eine anonymisierte Auswertung der simulierten Phishing-Angriffe besonders einfach ermöglicht.

Bei einer besonders vorteilhaften Ausgestaltung des erfindungsgemäßen Verfahrens ist vorgesehen, dass die vorgegebene Klassenanzahl für jede Klasse von dem der Klasse zugeordneten Täuschungsmaß abhängt. Bei einer derart ausgestalteten Gefährdungsmaß-Berechnungsvorschrift kann besonders einfach der für die Durchführung der Schulungsmaßnahme erforderliche Aufwand vorgegeben werden.

Erfindungsgemäß ist vorteilhafterweise vorgesehen, dass eine Klassenanzahl einer Klasse mit einem eine niedrige Wahrscheinlichkeit für einen Phishing-Angriff kennzeichnenden Täuschungsmaß größer ist als eine Klassenanzahl einer Klasse mit einem eine höhere Wahrscheinlichkeit für einen erfolgreichen Phishing-Angriff kennzeichnende Täuschungsmaß. Auf diese Weise kann berücksichtigt werden, dass in der Realität qualitativ minderwertigere Phishing-Attacken erheblich häufiger vorkommen als qualitativ äußerst aufwendige Phishing-Attacken.

Vorteilhafterweise ist vorgesehen, dass ein Phishing-Angriff als erfolgreich gewertet wird, wenn die mit dem Phishing-Angriff beabsichtigte Reaktion der angegriffenen Person erreicht wurde. Bei der beabsichtigten Reaktion kann es sich erfindungsgemäß beispielsweise um das Anklicken eines Hyperlinks, die Herausgabe von bestimmten Informationen oder das Öffnen einer Datei handeln.

Weitere vorteilhafte Ausgestaltungen werden anhand eines in der Zeichnung dargestellten Ausführungsbeispiels näher erläutert.

Es zeigt:
Fig. 1 ein schematisch dargestelltes Ablaufdiagramm des erfindungsgemäßen Verfahrens zur Ermittlung des Täuschungsmaßes und
Fig. 2 ein schematisch dargestelltes Ablaufdiagramm zur Durchführung des erfindungsgemäßen Verfahrens zur Ermittlung des Gefährdungsmaßes.

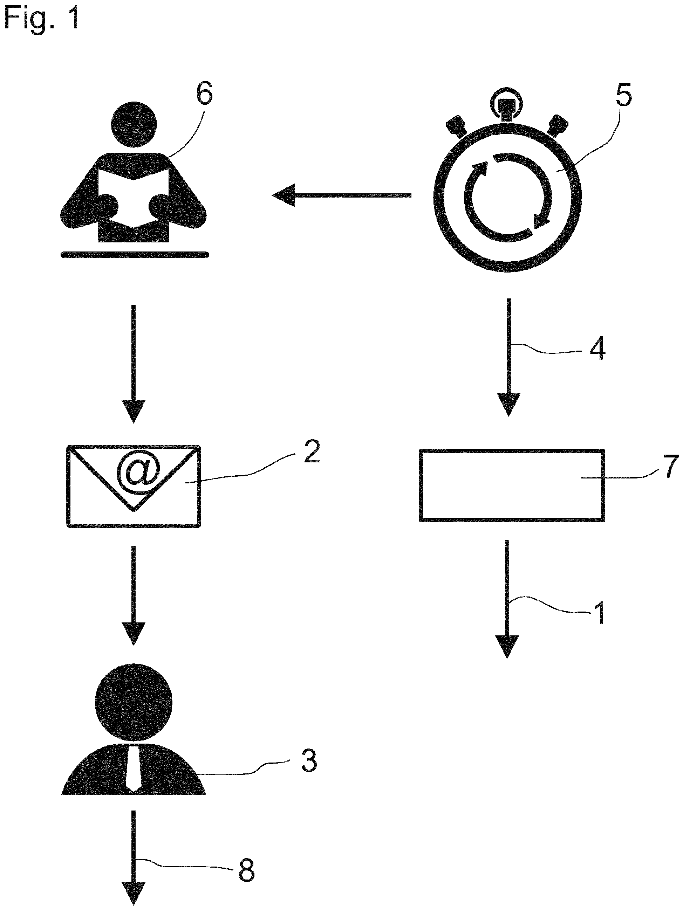

In Figur 1 ist schematisch ein Ablauf einer Ausgestaltung des erfindungsgemäßen Verfahrens zur Ermittlung eines Täuschungsmaßes 1 für einen einzelnen Phishing-Angriff 2 gegen eine Person 3 dargestellt. Zur Bestimmung des Täuschungsmaßes 1 für den einzelnen Phishing-Angriff 2 wird ein Zeitaufwand 4 mittels einer geeigneten Uhr 5 messtechnisch erfasst, der für die Vorbereitung des Phishing-Angriffs 2 benötigt wird. Der Phishing-Angriff 2 wird durch einen Angreifer 6 vorbereitet, der zur Vorbereitung beispielsweise Hintergrundinformationen zu der Person 3 in sozialen Medien recherchiert. Das Täuschungsmaß 1 wird anschließend ausgehend von dem messtechnisch erfassten Zeitaufwand 4 mit einer vorgegebenen Täuschungsmaßberechnungsvorschrift 7 ermittelt. Der vorbereitete Angriff 2 wird anschließend gegen die Person 3 durchgeführt und protokolliert, ob der Angriff 2 zu einer beabsichtigten Reaktion 8 der Person 3 geführt hat.

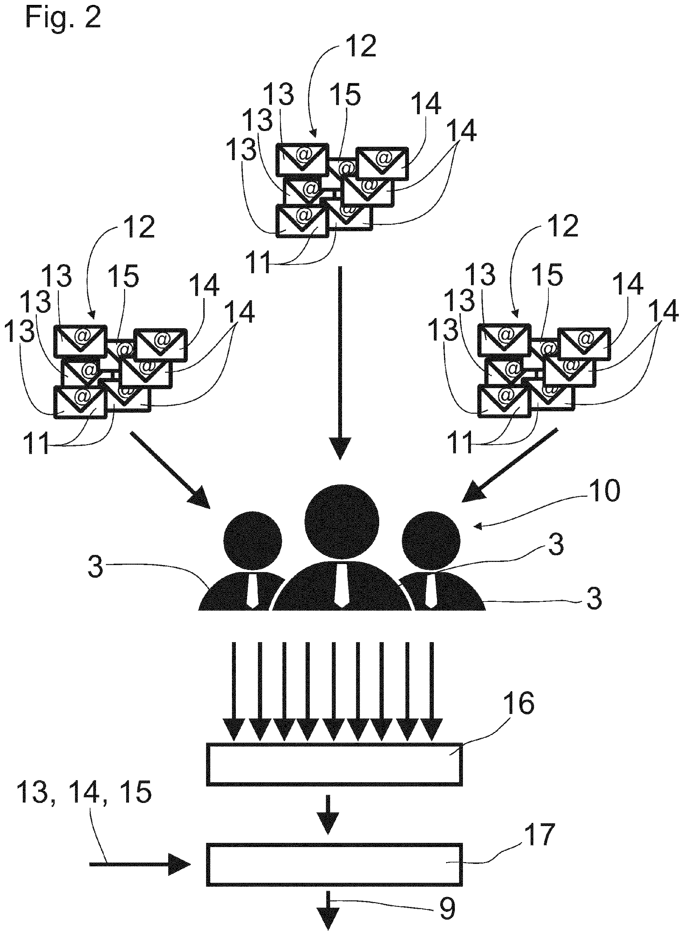

In Figur 2 ist schematisch der Ablauf zur Ermittlung eines Gefährdungsmaßes 9 einer Gruppe 10 von Personen 3 durch Phishing-Angriffe 11 dargestellt. Gegen jede Person 3 der Gruppe 10 wird eine vorgegebene Anzahl 12 von Phishing-Angriffen 11 mit vorgegebenen und gemäß dem in Figur 1 dargestellten Verfahren ermittelten Täuschungsmaßen 13, 14, 15 durchgeführt. In der Darstellung sind exemplarisch einzelne Phishing-Angriffe 11 mit einem Bezugszeichen gekennzeichnet. Für jeden Phishing-Angriff 11 wird in einem Protokollschritt 16 festgehalten, ob der jeweilige Phishing-Angriff 11 erfolgreich war. Anschließend wird das Gefährdungsmaß 9 unter Berücksichtigung des Täuschungsmaßes 13, 14, 15 des jeweiligen erfolgreichen Phishing-Angriffs 11 und der Anzahl erfolgreicher Phishing-Angriffe mit einer vorgegebenen Gefährdungsmaßberechnungsvorschrift 17 ermittelt wird.

## Patentansprüche

1. Verfahren zur Bestimmung eines Täuschungsmaßes (1, 13, 14, 15) für einen einzelnen Phishing-Angriff (2, 11) gegen eine Person (3), wobei das Täuschungsmaß (1, 13, 14, 15) ein Maß für die Wahrscheinlichkeit darstellt, dass der Phishing-Angriff (2, 11) erfolgreich ist, **dadurch gekennzeichnet, dass** ein für die Vorbereitung des Phishing-Angriffs (2, 11) gegen die Person (3) erforderlicher Zeitaufwand (4) messtechnisch erfasst wird und wobei unter Verwendung des messtechnisch erfassten Zeitaufwands (4) das Täuschungsmaß (1, 13, 14, 15) mit einer vorgegebenen Täuschungsmaßberechnungsvorschrift (7) ermittelt wird.

2. Verfahren gemäß Anspruch 1, **dadurch gekennzeichnet, dass** der messtechnisch erfasste Zeitaufwand (4) nach einer vorgegebenen Klasseneinteilungsvorschrift einer Klasse zugeordnet wird, wobei jeder Klasse ein Wert für das Täuschungsmaß (1, 13, 14, 15) zugewiesen ist.

3. Verfahren gemäß Anspruch 2, **dadurch gekennzeichnet, dass** einem für die Vorbereitung des Phishing-Angriffs (2, 11) erforderlicher messtechnisch erfasste Zeitaufwand (4) von weniger als einer Stunde das Täuschungsmaß (1, 13, 14, 15) 1 zugewiesen wird, das einem für die Vorbereitung des Phishing-Angriffs (2, 11) erforderlicher messtechnisch erfasste Zeitaufwand (4) von weniger als vier Stunden das Täuschungsmaß (1, 13, 14, 15) 2 zugewiesen wird, das einem für die Vorbereitung des Phishing-Angriffs (2, 11) erforderlicher messtechnisch erfasste Zeitaufwand (4) von weniger als sieben Stunden das Täuschungsmaß (1, 13, 14, 15) 3 zugewiesen wird, dass einem für die Vorbereitung des Phishing-Angriffs (2, 11) erforderlicher messtechnisch erfasste Zeitaufwand (4) von weniger als zehn Stunden das Täuschungsmaß (1, 13, 14, 15) 4 zugewiesen wird, dass einem für die Vorbereitung des Phishing-Angriffs (2, 11) erforderlicher messtechnisch erfasste Zeitaufwand (4) von weniger als vierzig Stunden das Täuschungsmaß (1, 13, 14, 15) 5 zugewiesen wird und dass einem für die Vorbereitung des Phishing-Angriffs (2, 11) erforderlicher messtechnisch erfasste Zeitaufwand (4) von mehr als vierzig das Täuschungsmaß (1, 13, 14, 15) 6 zugewiesen wird.

4. Verfahren zur Ermittlung eines Gefährdungsmaßes (9) einer Gruppe (10) von Personen (3) durch Phishing-Angriffe (2, 11), wobei das Gefährdungsmaß (9) ein Maß dafür darstellt, dass ein Phishing-Angriff (2, 11) gegen die Gruppe (10) von Personen (3) erfolgreich ist, wobei eine vorgegebene Anzahl (12) von Phishing-Angriffen (2, 11) mit vorgegebenen und gemäß einem der Ansprüche 1 bis 3 ermittelten Täuschungsmaßen (1, 13, 14, 15) gegen jede Person (3) der Gruppe (10) durchgeführt wird, wobei für jeden Phishing-Angriff (2, 11) festgehalten wird, ob der jeweilige Phishing-Angriff (2, 11) erfolgreich war und wobei das Gefährdungsmaß (9) unter Berücksichtigung des Täuschungsmaßes (1, 13, 14, 15) des jeweiligen erfolgreichen Phishing-Angriffs (2, 11) und der Anzahl erfolgreicher Phishing-Angriffe mit einer vorgegebenen Gefährdungsmaßberechnungsvorschrift (17) ermittelt wird.

5. Verfahren gemäß Anspruch 4, **dadurch gekennzeichnet, dass** ein klassenbezogenes Gefährdungsmaß (9) für jede Klasse gemäß Anspruch 2 ermittelt wird, wobei das jeweilige klassenbezogene Gefährdungsmaß (9) der prozentuale Anteil erfolgreicher Phishing-Angriffe (2, 11) von der jeweiligen Klasse zugeordneter Phishing-Angriffe (2, 11) ist.

6. Verfahren gemäß Anspruch 4, **dadurch gekennzeichnet, dass** für jede Klasse gemäß Anspruch 2 eine vorgegebene Klassenanzahl an der jeweiligen Klasse zugeordneter Phishing-Attacken (2, 11) gegen die Gruppe (10) durchgeführt wird, wobei das Gefährdungsmaß (9) der prozentuale Anteil aller erfolgreichen Phishing-Attacken (2, 11) ist.

7. Verfahren gemäß Anspruch 6, **dadurch gekennzeichnet, dass** die vorgegebene Klassenanzahl für jede Klasse von dem der Klasse zugeordneten Täuschungsmaß (1, 13, 14, 15) abhängt.

8. Verfahren gemäß Anspruch 7, **dadurch gekennzeichnet, dass** eine Klassenanzahl einer Klasse mit einem eine niedrige Wahrscheinlichkeit für einen erfolgreichen Phishing-Angriff (2, 11) kennzeichnenden Täuschungsmaß (1, 13, 14, 15) größer ist als eine Klassenanzahl einer Klasse mit einem eine höhere Wahrscheinlichkeit für einen erfolgreichen Phishing-Angriff (2, 11) kennzeichnenden Täuschungsmaß (1, 13, 14, 15).

9. Verfahren gemäß einem der Ansprüche 4 bis 8, **dadurch gekennzeichnet, dass** ein Phishing-Angriff (2, 11) als erfolgreich gewertet wird, wenn die mit dem Phishing-Angriff (2, 11) beabsichtigte Reaktion der angegriffenen Person (3) erreicht wurde.

## Claims

1. Method of determining a degree of deception (1, 13, 14, 15) for an individual phishing attack (2, 11) against a person (3), wherein the degree of deception (1, 13, 14, 15) represents a measure of the probability of the phishing attack (2, 11) being successful, **characterised in that** a time taken (4) which is necessary for preparing the phishing attack (2, 11) against the person (3) is detected by measuring, and, using the time taken (4) which is detected by measuring, the degree of deception (1, 13, 14, 15) is ascertained with a specified degree-of-deception calculation rule (7).

2. Method according to claim 1, **characterised in that** the time taken (4) which is detected by measuring is assigned to a class in accordance with a specified classification rule, wherein each class is allotted a value for the degree of deception (1, 13, 14, 15).

3. Method according to claim 2, **characterised in that** a time taken (4) which is detected by measuring and is necessary for preparing the phishing attack (2, 11) of less than one hour is allotted the degree of deception (1, 13, 14, 15) 1; **in that** a time taken (4) which is detected by measuring and is necessary for preparing the phishing attack (2, 11) of less than four hours is allotted the degree of deception (1, 13, 14, 15) 2; **in that** a time taken (4) which is detected by measuring and is necessary for preparing the phishing attack (2, 11) of less than seven hours is allotted the degree of deception (1, 13, 14, 15) 3; **in that** a time taken (4) which is detected by measuring and is necessary for preparing the phishing attack (2, 11) of less than ten hours is allotted the degree of deception (1, 13, 14, 15) 4; **in that** a time taken (4) which is detected by measuring and is necessary for preparing the phishing attack (2, 11) of less than forty hours is allotted the degree of deception (1, 13, 14, 15) 5, and **in that** a time taken (4) which is detected by measuring and is necessary for preparing the phishing attack (2, 11) of more than forty is allotted the degree of deception (1, 13, 14, 15) 6.

4. Method of ascertaining a degree of risk (9) of a group (10) of people (3) through phishing attacks (2, 11), wherein the degree of risk (9) represents a measure of a phishing attack (2, 11) against the group (10) of people (3) being successful, wherein a specified number (12) of phishing attacks (2, 11) with specified degrees of deception (1, 13, 14, 15) ascertained in accordance with one of claims 1 to 3 is carried out against each person (3) of the group (10), wherein it is recorded for each phishing attack (2, 11) whether the respective phishing attack (2, 11) was successful, and wherein the degree of risk (9) is ascertained taking account of the degree of deception (1, 13, 14, 15) of the respective successful phishing attack (2, 11) and the number of successful phishing attacks with a specified degree-of-risk calculation rule (17).

5. Method according to claim 4, **characterised in that** a class-related degree of risk (9) for each class according to claim 2 is ascertained, wherein the respective class-related degree of risk (9) is the percentage of successful phishing attacks (2, 11) of phishing attacks (2, 11) assigned to the respective class.

6. Method according to claim 4, **characterised in that** for each class according to claim 2 a specified class number of phishing attacks (2, 11) against the group (10) which are assigned to the respective class is carried out, wherein the degree of risk (9) is the percentage of all the successful phishing attacks (2, 11).

7. Method according to claim 6, **characterised in that** the specified class number for each class depends on the degree of deception (1, 13, 14, 15) assigned to the class.

8. Method according to claim 7, **characterised in that** a class number of a class with a degree of deception (1, 13, 14, 15) marking a low probability of a successful phishing attack (2, 11) is greater than a class number of a class with a degree of deception (1, 13, 14, 15) marking a higher probability of a successful phishing attack (2, 11).

9. Method according to one of claims 4 to 8, **characterised in that** a phishing attack (2, 11) is assessed as successful if the reaction of the attacked person (3) which was intended by the phishing attack (2, 11) has been achieved.

## Revendications

1. Procédé pour définir une mesure de falsification (1, 13, 14, 15) pour une attaque d'hameçonnage (2, 11) individuelle contre une personne (3), dans lequel la mesure de falsification (1, 13, 14, 15) constitue une mesure pour la probabilité que l'attaque d'hameçonnage (2, 11) soit réalisée avec succès, **caractérisé en ce que** le temps (4) requis pour la préparation de l'attaque d'hameçonnage (2, 11) contre la personne est détecté par une technique de mesure et dans lequel la mesure de falsification (1, 13, 14, 15) est déterminée avec une règle de calcul de mesure de falsification (7) spécifiée en utilisant le temps (4) détecté par une technique de mesure.

2. Procédé selon la revendication 1, **caractérisé en ce que** le temps (4) détecté par une technique de mesure est associé selon une règle de catégorisation spécifiée à une classe, dans lequel une valeur pour la mesure de falsification (1, 13, 14, 15) est attribuée à chaque classe.

3. Procédé selon la revendication 2, **caractérisé en ce que** la mesure de falsification (1, 13, 14, 15) 1 est attribuée à un temps (4) inférieur à 1 heure détecté par une technique de mesure, requis pour la préparation de l'attaque d'hameçonnage (2, 11), que la mesure de falsification (1, 13, 14, 15) 2 est attribuée à un temps (4) inférieur à 4 heures détecté par une technique de mesure, requis pour la préparation de l'attaque d'hameçonnage (2, 11), que la mesure de falsification (1, 13, 14, 15) 3 est attribuée à un temps (4) inférieur à 7 heures détecté par une technique de mesure, requis pour la préparation de l'attaque d'hameçonnage (2, 11), que la mesure de falsification (1, 13, 14, 15) 4 est attribuée à un temps (4) inférieur à 10 heures détecté par une technique de mesure, requis pour la préparation de l'attaque d'hameçonnage (2, 11), que la mesure de falsification (1, 13, 14, 15) 5 est attribuée à un temps (4) inférieur à 40 heures détecté par une technique de mesure, requis pour la préparation de l'attaque d'hameçonnage (2, 11), et que la mesure de falsification (1, 13, 14, 15) 6 est attribuée à un temps (4) supérieur à 40 détecté par une technique de mesure, requis pour la préparation de l'attaque d'hameçonnage (2, 11).

4. Procédé pour déterminer une mesure de mise en danger (9) d'un groupe (10) de personnes (3) par des attaques d'hameçonnage (2, 11), dans lequel la mesure de mise en danger (9) constitue une mesure qu'une attaque d'hameçonnage (2, 11) contre le groupe (10) de personnes soit réalisé avec succès (3), dans lequel un nombre (12) spécifié d'attaques d'hameçonnage (2, 11) avec des mesures de falsification (1, 13, 14, 15) spécifiées et déterminées selon l'une quelconque des revendications 1 à 3 est mis en œuvre contre chaque personne (3) du groupe (10), dans lequel il y a lieu de préciser pour chaque attaque d'hameçonnage (2, 11) si l'attaque d'hameçonnage (2, 11) respective a été réalisée avec succès et dans lequel la mesure de mise en danger (9) est déterminée avec une règle de calcul de mesure de mise en danger (17) spécifiée en tenant compte de la mesure de falsification (1, 13, 14, 15) de l'attaque d'hameçonnage (2, 11) respective réalisée avec succès et du nombre d'attaques d'hameçonnage réalisées avec succès.

5. Procédé selon la revendication 4, **caractérisé en ce qu'**une mesure de mise en danger (9) se rapportant à une classe est déterminée pour chaque classe selon la revendication 2, dans lequel la mesure de mise en danger (9) respective se rapportant à la classe est le pourcentage d'attaques d'hameçonnage (2, 11) réalisées avec succès de la classe respective d'attaques d'hameçonnage (2, 11) associées.

6. Procédé selon la revendication 4, **caractérisé en ce qu'**un nombre spécifié de la classe respective d'attaques d'hameçonnage (2, 11) associées contre le groupe (10) est mis en œuvre pour chaque classe selon la revendication 2, dans lequel la mesure de mise en danger (9) est le pourcentage de toutes les attaques d'hameçonnage (2, 11) réalisées avec succès.

7. Procédé selon la revendication 6, **caractérisé en ce que** le nombre spécifié de classe pour chaque classe dépend de la mesure de falsification (1, 13, 14, 15) associée à la classe.

8. Procédé selon la revendication 7, **caractérisé en ce qu'**un nombre d'une classe avec une mesure de falsification (1, 13, 14, 15) caractérisant une faible probabilité pour une attaque d'hameçonnage (2, 11) réalisée avec succès est supérieur à un nombre d'une classe avec une mesure de falsification (1, 13, 14, 15) caractérisant une probabilité plus grande pour une attaque d'hameçonnage (2, 11) réalisée avec succès.

9. Procédé selon l'une quelconque des revendications 4 à 8, **caractérisé en ce qu'**une attaque d'hameçonnage (2, 11) est évaluée comme étant réalisée avec succès quand la réaction, voulue avec l'attaque d'hameçonnage (2, 11), de la personne (3) attaquée a été atteinte.
